# EUROPEAN PATENT APPLICATION

(11) **EP 4 742 049 A1**
(43) Date of publication of application: **13.05.2026**
(21) Application number: 25215222.8
(22) Date of filing: 12.11.2025
(51) Int. Cl.: G06F 13/16, G06F 13/28

(54) **METHOD AND APPARATUS WITH PROCESSING-IN-MEMORY REQUEST GENERATION**

(30) Priority: 12.11.2024 KR 20240160432
(71) Applicant: Samsung Electronics Co., Ltd., Suwon-si, Gyeonggi-do 16677 (KR)
(72) Inventor: Paik, Yoonah, 16678 Suwon-si, Gyeonggi-do (KR); Cha, Sanghoon, 16678 Suwon-si, Gyeonggi-do (KR)
(74) Representative: Grünecker Patent- und Rechtsanwälte PartG mbB

(57) **Abstract**

A method and apparatus for processing-in-memory (PIM) are disclosed. A method of generating a PIM request for an in-memory operation includes receiving configuration information for generating a PIM request from a processor, obtaining information about a PIM request command from a command table, based on the configuration information, and generating a PIM request based on the information about a PIM request command.

## Description

### BACKGROUND

### 1. Field

The following description relates to a method and apparatus with processing-in-memory request generation.

### 2. Description of Related Art

In a typical computer system of the Von Neumann architecture, the function of a memory device may be separated from the function of a processor that performs operation on data in the memory device. Accordingly, a bottleneck may occur when a large amount of data is exchanged between a memory device and a processor in a system for performing operations of a neural network, processing big data, or processing Internet of Things (IoT) data, which require operations for a large amount of data. To solve this issue, research has been actively conducted on processing-in-memory (PIM) as a memory device that combines a function of a memory with a function of a processor for performing an arithmetic operation.

### SUMMARY

The invention is claimed in the independent claims. Preferred embodiments are specified in the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Aspects provide in-memory system technology that may be used in which either an in-memory operation device operates or does not operate as a dedicated memory command.

Aspects provide in-memory system technology that may be used without hardware modification of a processor.

Aspects provide in-memory system technology that may generate a processing-in-memory (PIM) request for an in-memory operation in a module separate from a processor such that the processor may perform a separate operation while generating the PIM request for an in-memory operation.

However, technical aspects are not limited to the foregoing aspects, and there may be other technical aspects.

In one general aspect, a method of generating a PIM request for an in-memory operation includes receiving configuration information for generating a PIM request from a processor; obtaining information about a PIM request command from a command table, the obtaining based on the configuration information; and generating a PIM request based on the obtained information about the PIM request command.

The obtaining of the information about a PIM request command may include obtaining the information about the PIM request command from the command table, based on a start address of the command table included in the configuration information.

The generating of the PIM request may include generating address information corresponding to the PIM request, based on information indicating an address range included in the information about a PIM request command and address mapping information included in the configuration information; and generating the PIM request including the generated address information.

The address mapping information may include mapping information of a memory field and a bit of an address and increment mode information of an address by each memory field.

The obtaining of the information about the PIM request command may include obtaining the information about a PIM request command from the command table, based further on a triggering signal to generate the PIM request received from the processor.

The method may further include transmitting the PIM request to a memory controller configured to control a PIM memory configured to perform an in-memory operation.

The processor may store the command table.

The command table may include information about one or more PIM request commands.

The information about the PIM request command may include a type of the PIM request command, an address of the PIM request command, and/or data to be operated on by the PIM request command.

The information about the PIM request command may further include fence information indicating whether to perform a memory fence operation for the PIM request command.

The type indicates an in-memory operation type or indicates a general memory operation type.

In another general aspect, an electronic device for an in-memory operation includes a processor, a memory controller, a PIM memory, and a PIM request generation module. The processor may transmit configuration information for generating a PIM request to the PIM request generation module, and the PIM request generation module may perform an operation of obtaining, based on the configuration information, information about a PIM request command from a command table, based on the configuration information, and is configured to perform an operation of generating a PIM request based on the PIM request command.

The PIM request may be transmitted to the memory controller configured to control the PIM memory.

The obtaining of the information about the PIM request command may include obtaining the information about the PIM request command from the command table, based on a start address of the command table included in the configuration information.

The generating of the PIM request may include generating address information corresponding to the PIM request, based on information indicating an address range included in the information about a PIM request command and address mapping information included in the configuration information; and generating the PIM request including the generated address information.

The address mapping information may include mapping information of a memory field and a bit of an address and increment mode information of an address by each memory field.

The obtaining of the information about a PIM request command may include obtaining the information about a PIM request command from the command table, based further on a triggering signal to generate a PIM request received from the processor.

The processor may store the command table in a storage space linked to the electronic device.

The command table may include information about one or more PIM request commands.

The information about the PIM request command may include at least one of type information, address information, data information, and fence information indicating whether to perform a memory fence operation for the PIM request command.

In another general aspect, a method includes: generating, by a processor, a table comprising entries, the entries comprising respective descriptions of PIM request commands; storing the table at a location of a memory; storing a configuration, the configuration indicating the location of the table; generating a trigger signal by the processor; responsive to the trigger signal, accessing the configuration to obtain the location of the table; based on the obtaining the location of the table, accessing the entries in the table to generate PIM requests respectively corresponding to the descriptions of the PIM request commands, each PIM request comprising an indication of a PIM operation type thereof and an address; receiving the PIM requests by a memory controller, and generating, by the memory controller, based on the PIM requests, PIM commands respectively corresponding to the PIM request; and receiving the PIM commands by a PIM memory device, and executing, by the PIM memory device, the PIM commands.

Other features and aspects will be apparent from the following detailed description, the drawings, and the claims.

### BRIEF DESCRIPTION OF THE DRAWINGS

FIG. 1 illustrates an example of a configuration of a memory system for processing-in-memory (PIM), according to one or more embodiments.
FIG. 2 illustrates an example of a method of generating a PIM request for an in-memory operation, according to one or more embodiments.
FIGS. 3A and 3B each illustrate an example of a command table according to one or more embodiments.
FIGS. 4A and 4B each illustrate an example of information about a PIM request command, according to one or more embodiments.
FIGS. 5A to 5C each illustrate an example of address mapping information according to one or more embodiments.
FIGS. 6A to 6C each illustrate an example of an address by memory fields, according to one or more embodiments.
FIG. 7 illustrates an example of a hardware configuration of a PIM request generation module, according to one or more embodiments.
FIG. 8 illustrates an example of a hardware configuration of an address generation module, according to one or more embodiments.
FIGS. 9A and 9B each illustrate an example of a configuration of a memory system for an in-memory operation, according to one or more embodiments.
FIGS. 10A to 10C each illustrate an example of a configuration of a memory system including a command table regarding a PIM request, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

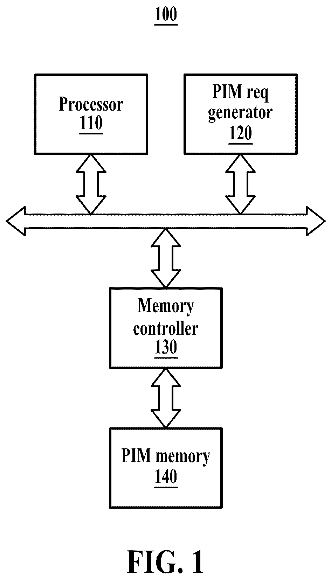

FIG. 1 illustrates an example of a configuration of a memory system for processing-in-memory (PIM), according to one or more embodiments.

Referring to FIG. 1, according to an embodiment, a memory system 100 may include a processor 110, a PIM request generation module (PIM request generator) 120, a memory controller 130, and a PIM memory 140. Briefly, in the following description, a PIM request may generated by the PIM request generation module 120 responsive to a trigger/signal from the processor (e.g., executing code of an application that uses the PIM memory 140). The PIM request generation module 120 may respond by generating the PIM request, which may be a form of description of a PIM command. The PIM request generation module 120 may transmit the generate PIM request to the memory controller 130. The memory controller 130 may convert/translate the PIM request into a corresponding memory command that is received by (and executable by) the PIM memory 140.

The processor 110 may be a host or a host processor. The processor 110 (e.g., executing code of an application using the PIM memory 140) may generate a command table (potentially re-usable) that can be used, when needed, by the PIM request generation module 120 to generate a PIM request; the processor 110 may store the command table in a storage space included in the memory system 100 or in any storage space linked to the memory system 100. The storage space that stores the command table may be any space accessible by the PIM request generation module 120. The command table is described in detail below, however, briefly, entries in the command table provide information about respective PIM commands (and possibly also non-PIM commands) that can be used to generate respectively corresponding PIM requests.

The processor 110 may transmit and load into the PIM request generation module 120, configuration information; the configuration information (or simply a "configuration") facilitates access to a corresponding command table, e.g., acting as a sort of pointer to the command table. When the processor 110 instructs/signals/triggers the PIM request generation module 120, the configuration that has been loaded thereinto may then be used by the PIM request generation module 120 to generate a PIM request (per an entry in the command table). The configuration may point to the command table and may include other information to facilitate the PIM request generation module 120 accessing the command table. The configuration may be input by a user or may be generated in the processor 110 based on the user's input. The configuration for generating a PIM request is described in detail below.

The PIM request generation module 120 may include circuitry and control logic. The PIM request generation module 120 may perform an operation for generating a PIM request, based on the circuit and the control logic. For example, the PIM request generation module 120 may obtain information about a PIM request command from an entry in the command table, based on the configuration information received from (loaded by) the processor 110. The PIM request generation module 120 may generate a PIM request based on the obtained information about a PIM request command. The operating method of the PIM request generation module 120 for generating a PIM request is described in detail below.

The PIM request generation module 120 may transmit a PIM request generated thereby to the memory controller 130. Based on the PIM request, the memory controller 130 may generate a memory command (e.g., a PIM command or non-PIM command), an address, and data. The memory command may be a PIM-specific memory command for an in-memory operation. The memory controller 130 may transmit the memory command, the address, and the data to the PIM memory 140, based on the PIM request, and the PIM memory 140 may perform an operation corresponding to the PIM request.

The PIM memory 140 may include a memory that performs an in-memory operation. In other words, the PIM memory 140 may be a memory that performs an in-memory operation in addition to a general memory operation, such as read and write. The in-memory operation may be performed on data that is stored in the PIM memory 140 before, during, and after the operation, i.e., the operation is performed on the data in situ in the PIM memory 140 without having to move the data specifically for the operation. The PIM memory 140 may be dynamic random-access memory (DRAM), but examples are not limited thereto. For example, the PIM memory 140 may be one of various types of RAM, such as static RAM (SRAM), magnetic RAM (MRAM), phase-change RAM (PRAM), ferroelectric RAM (FRAM), or resistive RAM (RRAM).

The PIM memory 140 may be divided into one or more layers of memory fields. For example, a memory field may be divided into a memory channel, a memory bank, a row, and a column. For example, the PIM memory 140 may include one or more memory channels. Each memory channel may include one or more memory banks. Each memory bank may include memory cells connected to word lines (WLs). The WLs may be connected to the memory cells, respectively. A memory cell array may include memory cells (not shown) arranged in row and column directions. Each of the memory cells may be connected to one corresponding WL of the WLs and one corresponding bit line (BL) among multiple BLs. Based on an address of a row received from the memory controller 130, one or more WLs may be selected from among the WLs as access targets. One or more WLs selected from among the WLs as the access targets may be activated.

For example, the PIM memory 140 may perform a type of an operation included/specified in a generated PIM request. For example, an operation performed in the PIM memory 140 according to the operation type included/indicated in the PIM request may be an operation of writing data in an address included in the PIM request, an operation of reading the data stored in the address included in the PIM request, an operation of performing a math/logic operation by reading the data stored in the address (which may function as an operand of the math/logic operation) included in the PIM request, an operation of storing the data stored in the address included in the PIM request in a register in one or more PIM memories 140, an operation of storing the data stored in the register in the one or more PIM memories 140 in the address included in the PIM request, an operation of writing the data included in the PIM request in the register in the one or more PIM memories 140, or an operation of reading the data stored in the register in the one or more PIM memories 140, as non-limiting examples.

In some embodiments, the PIM request generation module 120 may replace a direct memory access (DMA) controller of the memory system 100. In other words, the PIM request generation module 120 may provide the functionality of a DMA controller. In this case, in addition to a PIM request for an in-memory operation, a general memory request (as opposed to a PIM request) may also be transmitted to the memory controller 130 by/through the PIM request generation module 120.

In some embodiments, the memory system 100 may be/include an electronic device for an in-memory operation. The electronic device may include the processor 110, the memory controller 130, the PIM memory 140, and the PIM request generation module 120.

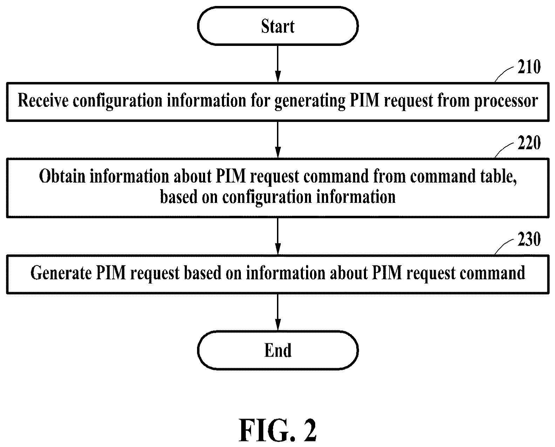

FIG. 2 illustrates an example of a method of generating a PIM request for an in-memory operation, according to one or more embodiments.

For example, the method of generating a PIM request illustrated in FIG. 2 may be performed by the PIM request generation module 130 of FIG. 1.

Referring to FIG. 2, the method of generating a PIM request, according to an embodiment, may include operation 210 of receiving a configuration (configuration information) to be used in generating a PIM request; the configuration may be received from a processor (e.g., the processor 110 of FIG. 1). The configuration may include information set to facilitate generating the PIM request by enabling the PIM request generation module 130 to obtain data from a command table. For example, the configuration may include an address of the command table and/or address mapping information, which may be used for generating a PIM memory address from address information stored in the command table.

The address information of the command table (which is in the now-loaded configuration) enables the PIM request generation module to access the command table (which is stored in a storage space). The address information of the command table may include, for example, a start address of the command table. As noted earlier, a processor may have previously caused the command table to be stored at the address thereof. The processor may correspond to the processor 110 of FIG. 1, for example. A memory that stores the command table may be any storage space accessible by the PIM request generation module.

The method of generating a PIM request, according to some embodiments, may include operation 220 of accessing the command table based on the configuration (the address/location of the command table therein), and obtaining from an entry in the command table information about a PIM request command. For example, operation 220 of obtaining the information about a PIM request command may include obtaining the information about the PIM request command from the command table, based on a start address of the command table that is included in the currently loaded configuration. The PIM request generation module may access the start address of the command table included in the configuration information and may obtain information stored in the command table.

The command table may include information about one or more PIM request commands (e.g., one or more table entries or nodes describing the respectively corresponding PIM request commands). For example, there may be n entries in the command table (n is a natural number) containing respective sets of information about n respective PIM request commands. A set of information about a PIM request command is for requesting the operation of a PIM memory and may include, for example, type information, address information, and/or data information of the corresponding PIM request command. The type information, address information, and data information are described next.

The type information is a type of the requested operation of the PIM memory and may include, for example, either information indicating an in-memory operation type or information indicating a general memory operation type. The general memory operation type may include an operation type performed in a general memory, which is not an in-memory operation, such as read and write.

The address information indicates an address of a PIM memory and may include, for example, information indicating an address range of the PIM memory. For example, the address information may include a start address and an end address. In this case, the address information may indicate a memory region ranging from the start address to the end address. As another example, the address information may include the start address and size/extent information. In this case, the address information may indicate a memory region of the size indicated by the size information from the start address. An address obtained by adding the size information to the start address may be the end address of the memory region indicated by the address information. For example, the address information may include information indicating an address range of a source (src) memory from which data is fetched. For example, the address information may include information indicating an address range of a destination (dst) memory where data is stored. The address information, depending on the types, may include (i) the information indicating an address range of the source memory or (ii) the information indicating an address range of the destination memory.

Data information may include information indicating data to be stored in memory or data used for an operation.

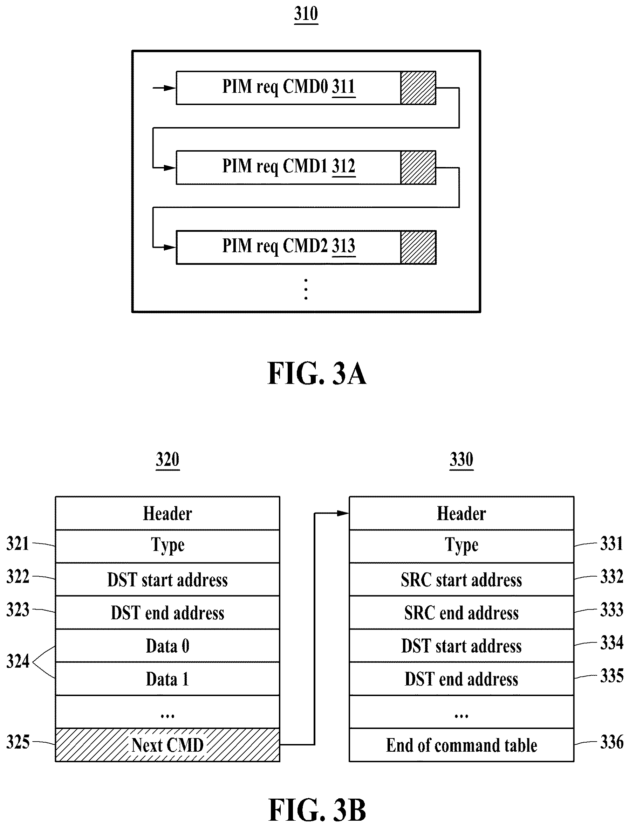

Referring to FIG. 3A, an example of a command table 310 may be a data structure such as a linked list (other data structures, such as fixed-format tables, may also be used to represent a command table). In brief, the nodes/entries of the linked list contain respective sets of information about respective commands of the PIM request. The command table 310 may include a first node 311 corresponding to a first PIM request command (PIM req CMD 0), a second node 312 corresponding to a second PIM request command (PIM req CMD 1), and a third node 313 corresponding to a third PIM request command (PIM req CMD 2). When the first PIM request command has a next command, the next command is the second PIM request command, and the first node 311 may include an address of a header of the second node 312 (thus linking the first node 311 to the second node 312). When the second PIM request command has a next, the next command is the third PIM request command, and the second node 312 may include an address of a header of the third node 313 (thus linking the second node 312 to the third node 313).

For example, referring to FIG. 3B, the first node 320 may include a first set of information about the first PIM request command. The first set of information may include a type 321 of the first PIM request command, a destination (DST) start address 322, a destination (DST) end address 323, and data information (Data 0, Data 1) 324 (the data information may serve as an operand of the corresponding PIM command, for example). The first set of information may also include an address (next CMD) 325 of the header of the second node 330 in which the a second set of information, which is about the second PIM request command, is stored.

The second set of information stored in the second node 330 may include the information about the second PIM request command. The second set of information may include a type 331 of the second PIM request command, a source (SRC) start address 332, a source (SRC) end address 333, a destination start address 334, and a destination end address 335. If the second node 330 is the last node of the command table, that is, if there is no next command of the second PIM request command in the command table, then the second node 330 may include information (end of command table, or terminator) 336 indicating it is the last node of the command table.

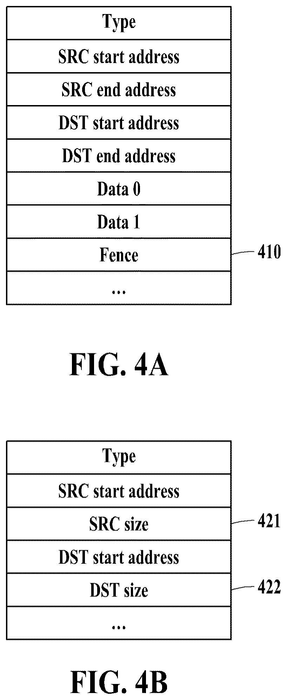

Referring to FIG. 4A, an example set of information about a PIM request command may include fence information 410 indicating whether to perform a memory fence operation in response to the PIM request command. If the fence information 410 indicates the performing of a memory fence operation, an operation upon another PIM request may not be performed until an operation upon a corresponding PIM request is completed.

Referring to FIG. 4B, an example of address information may include size information 421 of a source memory, instead of a source end address, to indicate an address range of the source memory. Address information may include size information 422 of a destination memory, instead of a destination end address, to indicate an address range of the destination memory.

Referring to FIG. 2 again, operation 220 of obtaining the set of information about a PIM request command, in some embodiments, may include obtaining the set of information about a PIM request command from the command table, based further on a triggering signal from the processor that triggers generating a PIM request. The triggering signal to generate a PIM request is a request for an in-memory operation received from the processor and may be distinguished from a general memory request. A PIM request generation module may obtain the set of information about a PIM request command from the command table indicated by the configuration in response to the triggering signal received from the processor.

In some embodiments, a general memory request that is not a request for an in-memory operation may not be processed in the PIM request generation module. For example, a general memory request, such as read and write, may not be transmitted to the PIM request generation module and rather may be transmitted to be processed in a DMA controller and/or a memory controller.

In some embodiments, a general memory request that is not a request for an in-memory operation may also be processed in the PIM request generation module. For example, if an electronic device including a memory system or a PIM memory device includes the PIM generation request module instead of a DMA controller, a general memory request may also be transmitted to the PIM generation request module.

The method of generating a PIM request, in some embodiments, may include operation 230 of generating a PIM request based on the information about a PIM request command obtained in operation 220. For example, a PIM request may be generated to include the type information of a PIM request command obtained from the command table. For example, a generated PIM request may include the data information of a PIM request command obtained from the command table. For example, a generated PIM request may include the address information of a PIM request command obtained from the command table. For example, a PIM request may also be generated to include address information generated based on the address information obtained from the command table.

In some embodiments, operation 230 of generating a PIM request may include generating address information corresponding to the PIM request, based on information indicating an address range (which is included in the information about a PIM request command) and address mapping information included in the configuration, and generating the PIM request including the generated address information. For example, information indicating an address range of a PIM memory obtained from the generated address command table may include information converted/translated into an address of the PIM memory, based on the address mapping information.

The address mapping information may include information to convert/translate address information included in the command table into the address of the PIM memory. For example, the address mapping information may include information to generate the address of the PIM memory corresponding to an address range obtained from the command table.

In some embodiments, the address mapping information may include the mapping information of a memory field and a bit of an address.

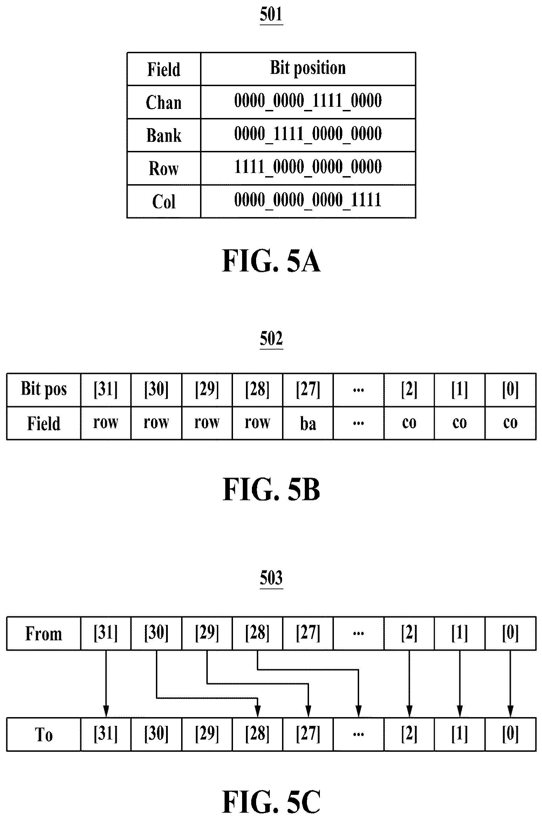

For example, referring to FIG. 5A, when address information stored in a command table is 16-bit data, address mapping information may include a table 501 that expresses a bit position mapped to each memory field as 1. Referring to the table 501 of FIG. 5A, for bit positions from 1 to 16, a memory channel (Chan) field may be mapped to the 9th to 12th bit positions. A memory bank (Bank) field may be mapped to the 5th to 8th bit positions. The row (Row) field may be mapped to the 1st to 4th bit positions. The column (Col) field may be mapped to 13th to 16th bit positions.

For example, referring to FIG. 5B, when address information stored in a command table is 32-bit data, address mapping information may include a table 502 that expresses a memory field mapped to each bit position. Referring to FIG. 5B, [28] to [31] bit positions may be mapped to a row field, a [27] bit position may be mapped to a memory bank (ba), and [0] to [2] bit positions may be mapped to a column (co) field.

In some embodiments, the address mapping information may include address information stored in the command table and mapping information of the address information of a PIM memory. For example, referring to FIG. 5C, when address information stored in a command table is 32-bit data, address mapping information may include a table 503 indicating a bit position of a PIM memory address mapped to each bit position of the address information stored in the command table. Referring to the table 503, a [31] bit position of the address information stored in the command table is mapped to a [31] bit position of the PIM memory address, a [30] bit position of the address information stored in the command table is mapped to a [28] bit position of the PIM memory address, and [29] bit position of the address information stored in the command table is mapped to a [27] bit position of the PIM memory address.

In some embodiments, the address mapping information may include increment mode information of an address by each memory field. The increment mode information of an address by each memory field may include information indicating which address of a memory field is first increased from a start address to an end address when information indicating an address range is obtained.

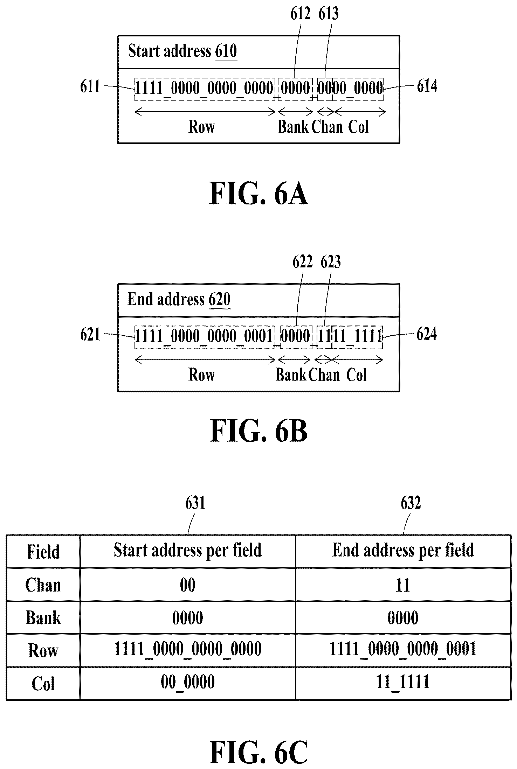

For example, as illustrated in FIG. 6A, when a start address 610 is obtained, based on address mapping information, the start address 610 may be divided into an address 611 mapped to a row (Row) field, an address 612 mapped to a memory bank (Bank) field, an address 613 mapped to a memory channel (Chan) field, and an address 614 mapped to a column (Col) field. In other words, as illustrated in FIG. 6C, the start address 610 may be divided into addresses 631 by memory fields. Referring to FIG. 6C, the address of the memory channel (Chan) field of the start address may be 00, the address of the memory bank (Bank) field thereof may be 0000, the address of the row (Row) field thereof may be 1111_0000_0000_0000, and the address of the column (Col) field may be 00_0000.

For example, as illustrated in FIG. 6B, when an end address 620 is obtained, based on address mapping information, the end address 620 may be divided into an address 621 mapped to a row (Row) field, an address 622 mapped to a memory bank (Bank) field, an address 623 mapped to a memory channel (Chan) field, and an address 624 mapped to a column (Col) field. In other words, as illustrated in FIG. 6C, the end address 620 may be divided into addresses 632 by memory fields. Referring to FIG. 6C, the address of the memory channel (Chan) field of the end address may be 11, the address of the memory bank (Bank) field thereof may be 0000, the address of the row (Row) field thereof may be 1111_0000_0000_0001, and the address of the column (Col) field may be 11_1111.

A PIM request generation module may generate a PIM memory address within an address range by increasing an address by one from a start address to an end address. For example, the generating of the PIM memory address within the address range may be performed in an address generation module included in the PIM request generation module. The address generation module is described in detail below.

Address mapping information may include priority information of a memory field (e.g., rank information). The PIM request generation module may generate the PIM memory address within the address range by increasing an address from an address of a memory field having a low priority/rank. For example, if the priorities of the memory fields are in the order from a column, a channel, and a row, the address of the column field in the start address 610 of FIG. 6A may be increased by 1, and the address of 1111_0000_0000_0000_0000_0000_0001 and the address of 1111_0000_0000_0000_0000_0000_0010 may be generated in sequence. If the address of the column field is generated to 11_1111, which is the address of the column field of the end address 620, the address of 1111_0000_0000_0000_0000_0100_0000 where the address of the memory channel field is increased by one from 00 to 01 is generated, and the address of 1111_0000_0000_0000_0000_0100_0001 where the address of the column field increased by one from 00_0000, and the address of 1111_0000_0000_0000_0000_0100_0010 may be generated in sequence. If the address of the column field is generated to 11_1111, which is the address of the column field of the end address 620, the address of the memory channel field is increased by one. If the address of the memory channel field is generated to 11, which is the address of the channel field of the end address 620, the start address of the bank field may be the same as the end address of the bank field, and the address of 1111_0000_0000_0001_0000_0000_0000 where the address of the row field having the next priority is increased by 1 is generated.

In some embodiments, a generated PIM request may include PIM memory address(es) generated based on address mapping information from address information obtained from a command table.

In some embodiments, the method of generating a PIM request may include an operation of transmitting the PIM request to a memory controller configured to control a PIM memory configured to perform an in-memory operation. For example, the memory controller may correspond to the memory controller 130 of FIG. 1, and the PIM memory may correspond to the PIM memory 140 of FIG. 1.

If the type of the generated PIM request is an in-memory operation type, the PIM memory that has received a memory command requesting an in-memory operation based on the PIM request through the memory controller performs the in-memory operation. The PIM memory may perform the in-memory operation based on address information and data information included in the PIM request.

If the type of the generated PIM request is a general memory operation type (i.e., any non-PIM memory operation), the PIM memory that receives the corresponding memory command requesting the general memory operation based on the PIM request through the memory controller may perform the general memory operation. The PIM memory performs the general memory operation based on address information and data information included in the PIM request.

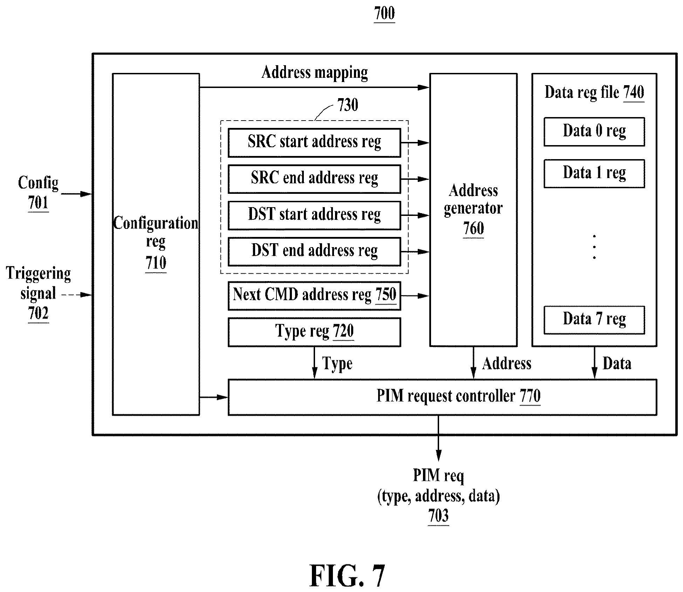

FIG. 7 illustrates an example of a hardware configuration of a PIM request generation module, according to one or more embodiments.

Referring to FIG. 7, a PIM request generation module 700, in some embodiments, may receive a configuration (Config) 701, for example, from a processor (e.g., the processor 110 of FIG. 1). The received configuration 701 may be stored in a configuration register (Configuration reg) 710 for storing the configuration information of the PIM request generation module 700.

The PIM request generation module 700 may receive a triggering signal 702, which triggers the generation of a PIM request by the PIM request generation module 700. The PIM request generation module 700 may perform the above-described operation of generating a PIM request in response to receiving the triggering signal 702, which may be received from a processor (e.g., the processor 110 of FIG. 1).

Responsive to the triggering signal 702, The PIM request generation module 700 may obtain information about a PIM request command from a command table; the information obtained based on the currently loaded configuration 701. For example, the type information of the PIM request command obtained from the command table may be stored in a type register (Type reg). 720. For example, address information obtained from the command table may be stored in a register 730 for storing address information. For example, data information obtained from the command table may be stored in a register 740 for storing data information.

As described above, the command table may be in the form of a linked list including node(s) corresponding to each PIM request. The type information, the address information, and/or the data information by each type may be obtained and stored in registers 710, 720, 730, and 740 of the PIM request generation module 700, for example, each time a node is read from the linked list, its information may be loaded into the aforementioned registers. A node may include information indicating an address of the next node, and the information indicating the address of the next node may be also stored in the register 750 of the PIM request generation module 700, thus allowing the PIM request generation module 700 to generate PIM requests for the sequence of respective commands in the linked list (command table). When a PIM request for a specific node is generated, for example, a node indicated by an address stored in the register 750, data from that node may be loaded into registers, specifically, the type information, the address information, and/or the data information may be loaded into the registers 710, 720, 730, 740, and 750 of the PIM request generation module 700. If the node most recently loaded into the registers 710, 720, 730, 740, and 750 is the last node stored in the command table, the information indicating the next node may not be obtained. For example, if the node is the last node stored in the command table, the information indicating that it is the last node may be obtained, and the information indicating that it is the last node may be stored in the register 750 (e.g., a predefined address value). If the information indicating that it is the last node is stored in the register 750, the operation of obtaining information from the command table may be terminated.

The PIM request generation module 700 may include an address generation module (address generator) 760. The address generation module 760 may be configured to generate a PIM memory address based on the configuration 701 and address information included in the register 730 for storing an address. As described above, the address generation module 760 may generate PIM memory address(es) in a range corresponding to a start address and an end address of a source (SRC) and/or a destination (DST) based on address mapping information included in the configuration information 701.

The PIM request generation module 700 may include a PIM request controller 770 configured to output a PIM request. The PIM request controller 770 may generate a PIM request 703 including the type information stored in the type register 720, the address information generated in the address generation module 760, and/or the data information stored in the data register 740.

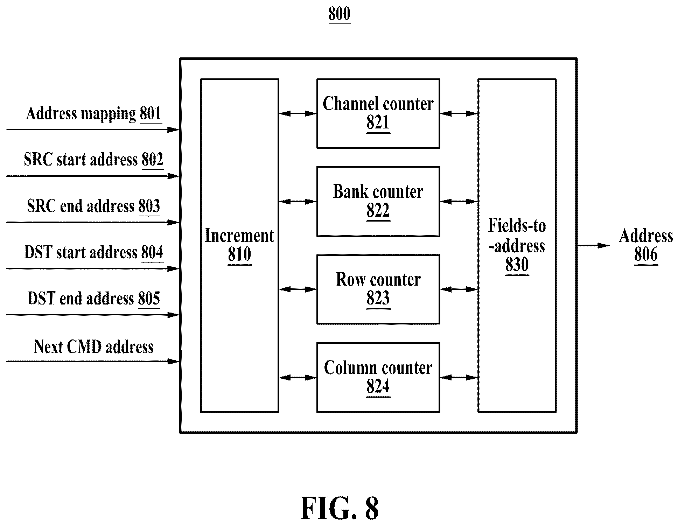

FIG. 8 illustrates an example of a hardware configuration of an address generation module, according to one or more embodiments.

Referring to FIG. 8, an address generation module 800 may generate PIM memory address information 802, 803, 804, and 805 by converting the address information 802, 803, 804, and 805 obtained from a command table, based on address mapping information 801 included in the configuration.

The address generation module 800 may include an increment module 810. The increment module 810 may distinguish the received address information 802, 803, 804, and 805 by memory fields based on the address mapping information 801. An address by each memory field may be distributed to a counter by each memory field. The increment module 810 may control a counter by each memory field based on address increment mode information included in the address mapping information 801. A counter per each memory field may increase an address of each memory field by one. For example, the counter per each memory field may include a channel counter 821 that increases an address of a memory channel field, a bank counter 822 that increases an address of a memory bank field, a row counter 823 that increases an address of a row field, and a column counter 824 that increases an address of a column field. The increment module 810 may control the increase of an address by each memory field based on the priorities of memory fields included in the address mapping information 801.

When at least one counting operation is executed among the counters, an output of a counter may be combined into an address through a field-to-address conversion module 830. The address combined in the field-to-address conversion module 830 may be output as a PIM memory address 806. The output PIM memory address 806 may be an address increased by 1 from the previously output address.

The address generation module 800 may generate and output the address 806 increased by one from a start address to an end address.

The address generation module 800 may divide a series of addresses into addresses by memory fields according to predetermined address mapping information and may generate an address increased by one through an increment mode according to the priorities/ranks of the memory fields. For example, the address generation module 800 may generate four-dimensional consecutive addresses by dividing the series of addresses into four memory fields, that is, a memory channel, a memory bank, a row, and a column. In other words, the address generation module 800 may generate n-dimensional consecutive addresses in addition to one-dimensional and two- dimensional consecutive addresses.

As described above, a PIM request generation module may be used as a DMA controller. The PIM request generation module may cause the address generation module 800 to generate one- or two-dimensional consecutive addresses to perform the operation of a DMA controller. For example, the address generation module 800 may generate one-dimensional consecutive addresses from a start address to an end address by using only one counter by each memory field. For example, the address generation module 800 may generate two-dimensional consecutive addresses from a start address to an end address by using two counters by memory fields. Both a request for an in-memory operation and a general memory request may be transmitted to a memory controller through the PIM request generation module.

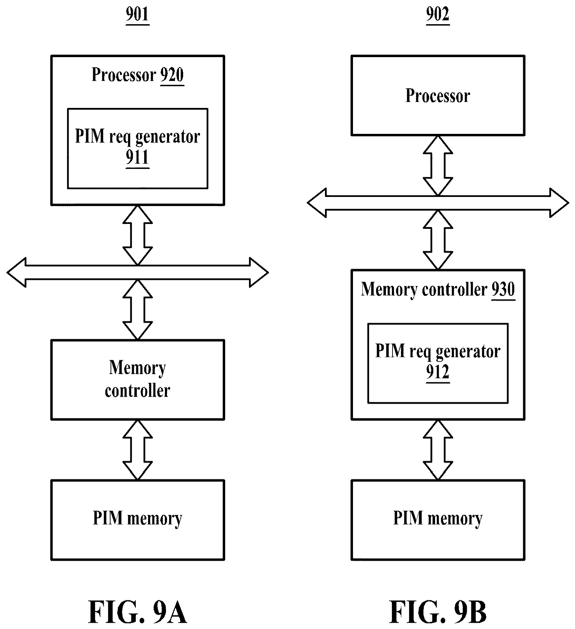

FIGS. 9A and 9B each illustrate an example of a configuration of a memory system for an in-memory operation, according to one or more embodiments.

Referring to a memory system 901 of FIG. 9A, unlike the memory system 100 illustrated in FIG. 1, a PIM request generation module 911 may be included in a processor 920. If the PIM request generation module 911 is included in the processor 920, communication overhead with the processor 920 may be reduced.

Referring to a memory system 902 of FIG. 9B, unlike the memory system 100 illustrated in FIG. 1 and the memory system 901 illustrated in FIG. 9A, a PIM request generation module 912 may be included in a memory controller 930. If the PIM request generation module 912 may be included in the memory controller 930, a general memory request and a request for an in-memory operation may be readily scheduled.

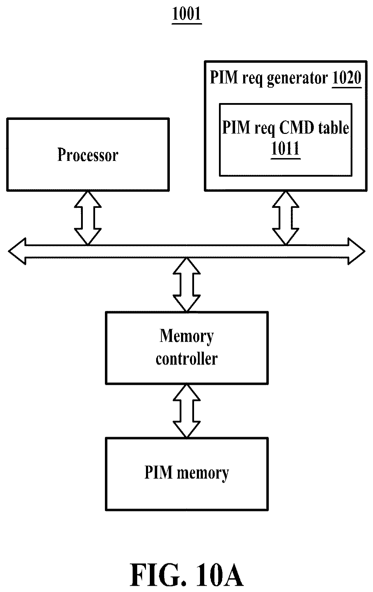

FIGS. 10A to 10C each illustrate an example of a configuration of a memory system including a command table regarding a PIM request, according to one or more embodiments.

Referring to a memory system 1001 of FIG. 10A, a command table (PIM req CMD table) 1011 for a PIM request may be included in a PIM generation module 1020. In other words, the command table 1011 may be stored in a storage space in the PIM generation module 1020. As described above, the address of the command table 1011 may be included in the configuration. The PIM request generation module 1020 may obtain data stored in the command table 1011, referring to the address of the command table 1011 included in the configuration.

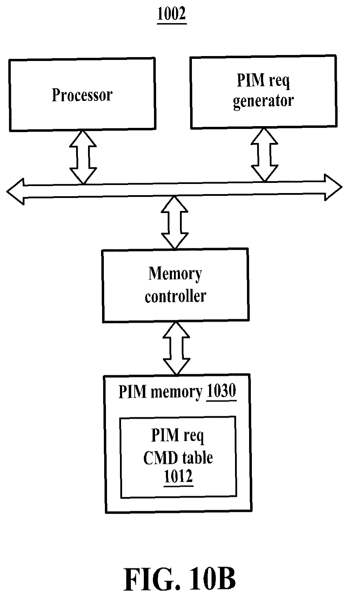

Referring to a memory system 1002 of FIG. 10B, unlike the memory system 1001 illustrated in FIG. 10A, a command table 1012 may be included in a PIM memory 1030. In other words, the command table 1012 may be stored in a partial space in the PIM memory 1030.

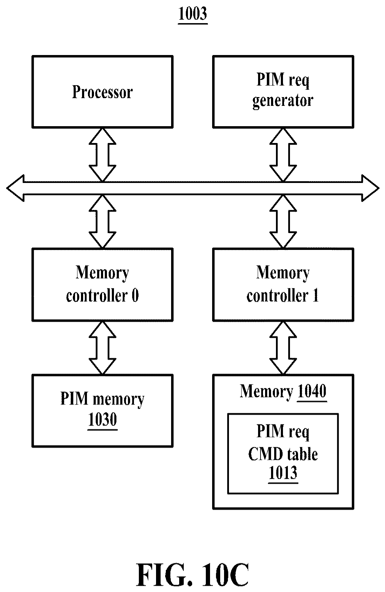

Referring to a memory system 1003 of FIG. 10C, unlike the memory system 1001 illustrated in FIG. 10A and the memory system 1002 illustrated in FIG. 10B, a command table 1013 may be included in a general memory 1040. The general memory 1040 may be a memory not supporting an in-memory operation unlike the PIM memory 1030.

The units described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field-programmable gate array (FPGA), a programmable logic unit (PLU), a microprocessor, or any other device capable of responding to and executing instructions in a defined manner. The processing device may run an operating system (OS) and one or more software applications that run on the OS. The processing unit also may access, store, manipulate, process, and generate data in response to execution of the software. For purpose of simplicity, the description of a processing unit is used as singular; however, one skilled in the art will appreciate that a processing unit may include multiple processing elements and multiple types of processing elements. For example, the processing unit may include a plurality of processors, or a single processor and a single controller. In addition, different processing configurations are possible, such as parallel processors.

The software may include a computer program, a piece of code, an instruction, or some combination thereof, to independently or collectively instruct or configure the processing unit to operate as desired. Software and data may be stored in any type of machine, component, physical or virtual equipment, or computer storage medium or device capable of providing instructions or data to or being interpreted by the processing unit. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as read-only memory (ROM), RAM, flash memory, and the like. Examples of program instructions include both machine code, such as produced by a compiler, and files containing higher-level code that may be executed by the computer using an interpreter.

The computing apparatuses, the electronic devices, the processors, the memories, the information output system and hardware, the storage devices, and other apparatuses, devices, units, modules, and components described herein with respect to FIGS. 1-10C are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-10C that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure is also defined by the enclosed claims.

## Claims

1. A method of generating a processing-in-memory, PIM, request for an in-memory operation, the method comprising:
receiving, from a processor, a configuration for generating a PIM request;
obtaining information about a PIM request command from a command table, the obtaining based on the configuration information; and
generating a PIM request based on the obtained information about the PIM request command.

2. The method of claim 1, wherein the obtaining the information about the PIM request command comprises
obtaining the information about the PIM request command from the command table, based either on a start address of the command table comprised in the configuration or on a triggering signal to generate a PIM request received from the processor.

3. The method of claim 1 or 2, wherein the generating the PIM request comprises:
generating address information corresponding to the PIM request, based on information indicating an address range comprised in the information about the PIM request command and address mapping information comprised in the configuration information; and
generating the PIM request comprising the generated address information, wherein the address mapping information preferably comprises
mapping information of a memory field and a bit of an address and increment mode information of an address by memory fields.

4. The method of one of claims 1 to 3, further comprising:
transmitting the PIM request to a memory controller configured to control a PIM memory configured to perform an in-memory operation.

5. The method of one of claims 1 to 4, wherein the processor stores the command table.

6. The method of one of claims 1 to 5, wherein the command table comprises information about one or more PIM request commands.

7. The method of one of claims 1 to 6, wherein the information about the PIM request command comprises a type of the PIM request command, an address of the PIM request command, or data to be operated on by the PIM request command.

8. The method of claim 7, wherein the information about the PIM request command further comprises fence information indicating whether to perform a memory fence operation for the PIM request command, or
wherein the type indicates an in-memory operation type or indicates a general memory operation type.

9. An electronic device for processing-in-memory, PIM, the electronic device comprising:
a processor;
a memory controller;
a PIM memory; and
a PIM request generation module,
wherein the processor is configured to transmit a configuration to the PIM request generation module, and
the PIM request generation module is configured to perform an operation of obtaining, based on the configuration, information about a PIM request command from a command table, and is configured to perform an operation of generating a PIM request based on the PIM request command.

10. The electronic device of claim 9, wherein the PIM request is transmitted to the memory controller configured to control the PIM memory.

11. The electronic device of claim 9 or 10, wherein the obtaining the information about the PIM request command comprises
obtaining the information about the PIM request command from the command table, based on a start address of the command table comprised in the configuration information.

12. The electronic device of one of claims 9 to 11, wherein the generating the PIM request comprises:
generating address information corresponding to the PIM request, based on information indicating an address range comprised in the information about the PIM request command and address mapping information comprised in the configuration information; and
generating the PIM request comprising the generated address information,
wherein the address mapping information preferably comprises mapping information of a memory field and a bit of an address and increment mode information of an address by memory fields.

13. The electronic device of one of claims 9 to 12, wherein the obtaining the information about the PIM request command comprises obtaining the information about the PIM request command from the command table, based further on a triggering signal to generate a PIM request received from the processor.

14. The electronic device of one of claims 9 to 13, wherein
the command table comprises information about one or more PIM request commands,
and
the information about a PIM request command comprises at least one of type information, address information, data information, and fence information indicating whether to perform a memory fence operation for the PIM request command.

15. A non-transitory computer-readable storage medium storing instructions that, when executed by a processor, cause the processor to perform the method of generating a processing-in-memory, PIM, request for an in-memory operation, the method comprising:
receiving a configuration for generating a PIM request;
obtaining information about a PIM request command from a command table, the obtaining based on the configuration information; and
generating a PIM request based on the obtained information about the PIM request command.
